# EUROPEAN PATENT SPECIFICATION

(11) **EP 1 916 057 B1**
(45) Date of publication and mention of the grant of the patent: **05.08.2009**
(21) Application number: 06381042.8
(22) Date of filing: 24.10.2006
(51) Int. Cl.: B24B 9/00, B24B 27/00, B23C 1/12, B23C 3/12

(54) **Beveling machine**
Anfasmaschine
Machine de chanfreinage

(43) Date of publication of application: 30.04.2008
(73) Proprietor: Cevisa Fabricaciones, S.L., 01013 Vitoria (ES)
(72) Inventor: Abalos Cortazar, Angel, 01013 Vitoria (ES)
(74) Representative: Urizar Anasagasti, Jesus Maria

(56) References cited:
- DE-U1- 8 707 439
- GB-A- 1 474 182
- JP-A- 59 007 512
- US-B1- 6 454 512

## Description

### Object of the Invention

The present invention relates to a tool machine carrying out a continuous bevel in a part that will be joined to another by means of a weld bead.

In order to join two parts in a longitudinal direction or forming a certain angle it is necessary to carry out a bevel cut in the edges such that when they are opposite each other they leave a V-shaped channel in which the weld bead will be deposited, such that the weld can effectively resist the stress to which the part is subjected.

### Background of the Invention

There are currently several types of beveling machines, among which stands out a beveler comprising a cutting tool arranged in a shaft inclined with respect to the horizontal, and before it there are means for fixing the part below and above it consisting of a roller, such that when the relative side movement is carried out between the part and the cutting element a beveling occurs thanks to the rotational movement received by the tool of an electric motor. When the parts are small, the machine itself moves the part as it machines it, whereas when the parts are large it is the machine which moves along the part.

The document JP-59007512 of NAGAOKA KOUKI describes a machine that cuts in a bevelled way a piece that allows the angle of a rotary cutter is set by means of a driving part for angle adjustment so as to realize a predetermined groove angle and is manually inputted to an angle input part. An angular output signal in accordance with said input groove angle and a positional output signal in accordance with the existing position of the rotary cutter issued by a positional control device are calculated by means of the electronic computer in order to indicate the root dimension based upon the set condition on the root dimension indicating part.

### Description of the Invention

The invention relates to a series of improvements introduced in a machine with these features tending to improve its performance, for which purpose a support structure provided with a carriage with its own movement and having independent suspension means has been designed. It was also necessary to be able to control its machining level more easily and accurately, both in its depth and in the beveling angle applied. These machines were designed to work with the cutter or cutting tool located above the part, but in certain applications it is more operative to carry out the machining of the lower edge, for which purpose two variants have been designed, one variant of an inverted machine and another of a reversible machine.

Therefore, the present invention relates to a series of improvements introduced in a beveling machine, of those comprising a casing in which a block of the machine is assembled, including a transmission from an actuation motor to a cutting tool arranged in a shaft inclined with respect to the horizontal, in front of which it incorporates fixing means for fixing a part, which upon carrying out the machining of the part cause a continuous bevel cut and causes a relative side movement between the part and the cutting tool, the part moving as it is machined when the parts are small, or the machine itself moving on the part when the latter is large. This machine comprises:
a) in the casing of the machine, means for the rotation of the block of the machine inside it, which means allow varying the angle formed by the shaft of the cutting tool with the horizontal for the purpose of adjusting the beveling angle ;
b) a sliding carriage forming the means for fixing the part to be machined provided with height adjustment means which allow varying the nearing or separation of the part to the cutting tool and thus controlling the bevel degree caused by the tool ;
c) means for the support and independent movement of the machine formed by a carriage with orientable wheels and an independent suspension mechanism formed by four corner points each of which is located between respective springs which are interposed respectively between the support point in the carriage and a base of the machine and between the base and an upper stop nut, said springs acting as a suspension means for the base of the machine so that the latter can carry out a horizontal movement during its running despite the deficiencies or obstacles in its path.

For the purpose of changing the beveling degree, the block of the machine has at its side projecting rods or screws projecting through arched windows in the lateral sides of the machine, defining rotation guides for said block. At least one of these rods is formed by a fixing screw establishing the desired position which is marked by a graduated scale parallel to the arched windows. The block of the machine orthogonally has a projecting lever provided with a threaded coupling for a spindle emerging outside the machine, where it has a flywheel or another similar actuation means; with this spindle the rotation of the block in its coupling to the lateral sides in a vertical plane parallel to said silage sides is achieved, and thus the variation of the angle of attack of the tool in the part in order to adjust the beveling degree is achieved According to a feature of the invention, each of the support points existing in the carriage is formed by a vertically arranged threaded rod and provided at the base with a threaded part by way of a nut forming the seating base for the corresponding lower spring, the height of the base of the machine being varied with the nut until it reaches the desired position.

This machine can be assembled with the tool inverted with respect to its usual position, i.e. attacking the part from blow for the purpose of beveling the lower edge of the part, instead of the upper edge as is usually carried out in the conventional machine. It is also feasible to obtain a reversible machine, for which purpose the block of the machine is assembled in a frame with a C-shaped configuration having in the center of its web a rotating shaft assembled in the base of the structure of the machine, which allows rotating the machine so as to locate the machine above or below the part to be machined, positions which are ensured with a through pin linking said frame with the structure at its vertical post.

### Description of the Drawings

In order to complement the description which is being made and with the aim of facilitating the understanding of the features of the invention, a set of drawings is attached to this specification in which the following has been represented with an illustrative and non-limiting character:

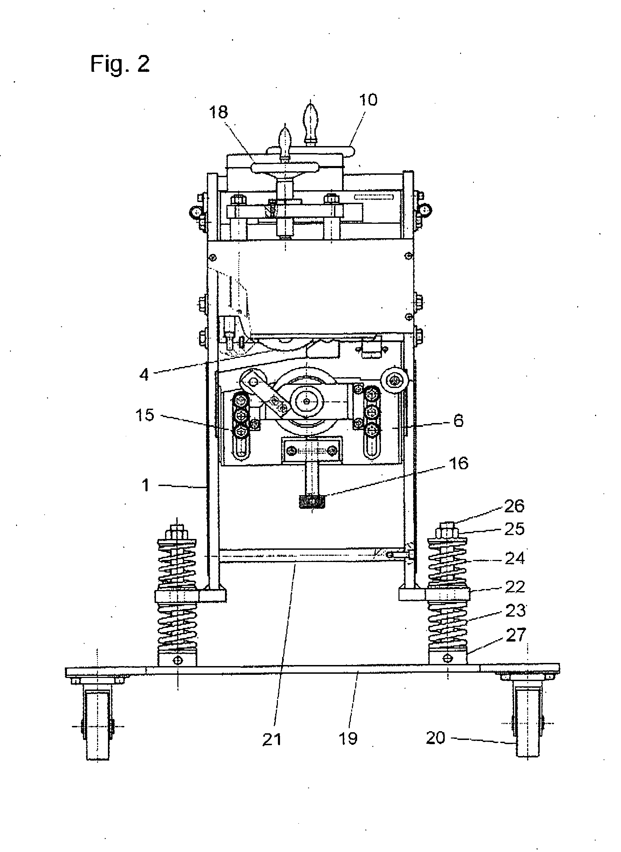

Figures 1 and 2 show respective side elevational and front views of a beveling machine according to the invention.

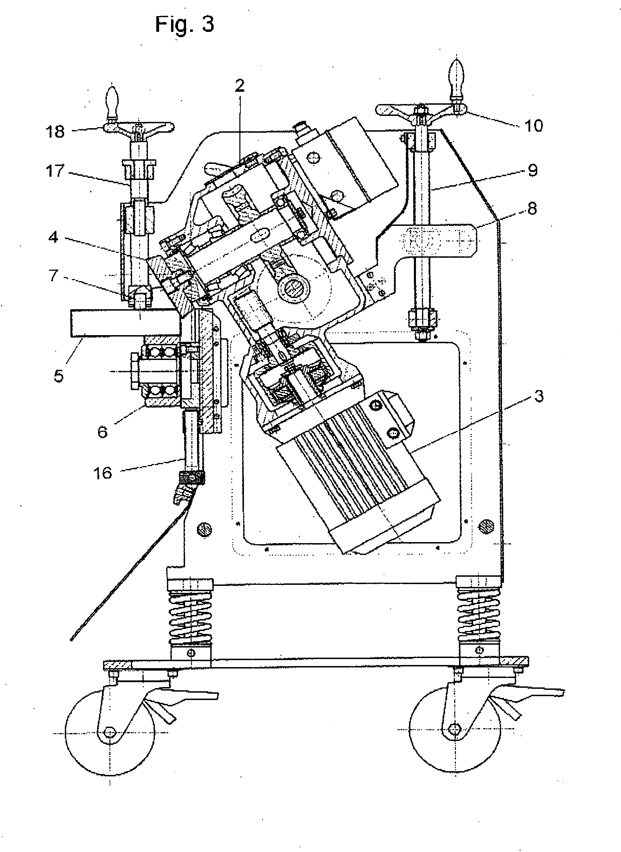

Figure 3 shows a sectional side elevational view of the previous machine.
Figure 4 shows a side elevational view of an embodiment variant of a machine in which the position of the beveling angle variation means has been changed.
Figure 5 shows a side elevational view of another embodiment variant showing the inverted machine.
Figure 6 shows a side elevational view of a reversible beveling machine.

### Preferred Embodiment of the Invention

As can be seen in the indicated figures, the beveler of the invention is a tool machine having, in a chassis or casing (1), a block or body (2) of the machine in which it integrates an actuation motor (3) with its corresponding transmission and reduction to the shaft of a cutting tool (4) by way of a cutter located in a plane inclined with respect to the horizontal, such that it attacks and bevels the part (5) to be machined causing a continuous cut to it as it rotates, since the part is trapped between a lower carriage (6) and an upper roller (7), both with the ability to move the part horizontally, such that when the part is positioned in the machine when the latter starts running, it either moves the part towards a side as it bevels, or if the part is large and is fixed, locating the machine on the part, it is the machine which moves by the means it has rolling on the floor of the workshop or factory.

The sides or silage sides of the chassis of the machine have respective arched windows (11) from which several rods or screws (12-13) stick out such that the assembly or block (2) of the machine can rotate according to a hypothetical transverse horizontal axis thus varying the angle formed by the tool (4) with the horizontal or with the part (5). At least one of these screws (12) has an outer head or nut allowing its tightening to immobilize the block in a predetermined position. A graduated scale (14) marking the angle formed by said tool in each position or in other words the beveling angle produced in this position is also envisaged.

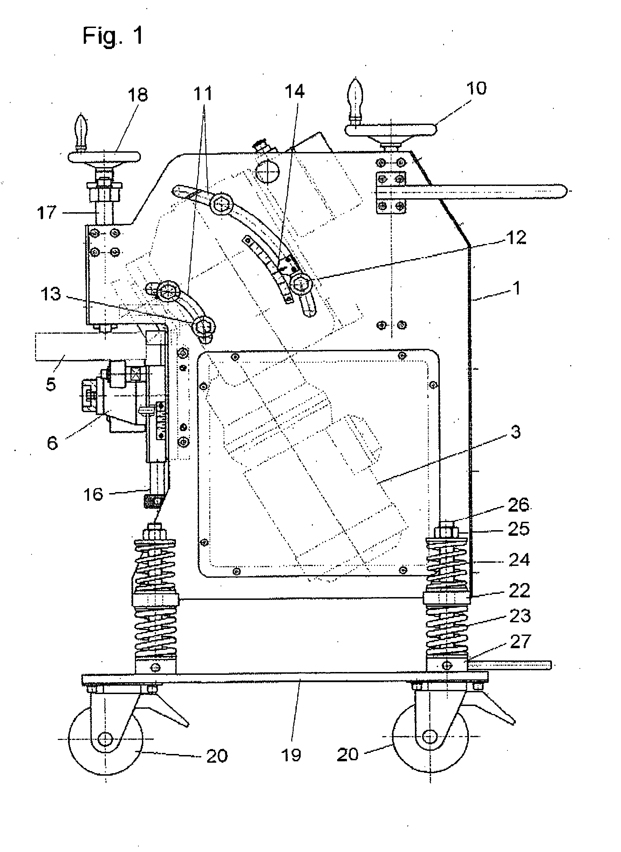

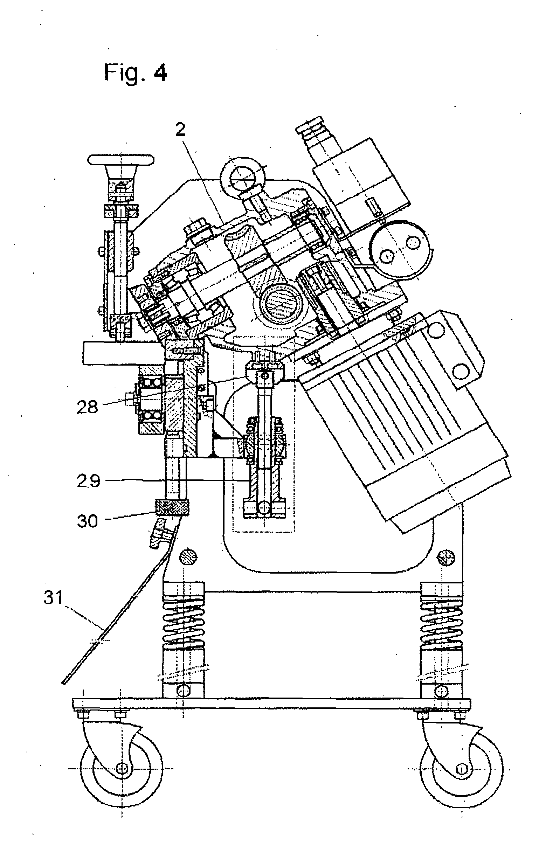

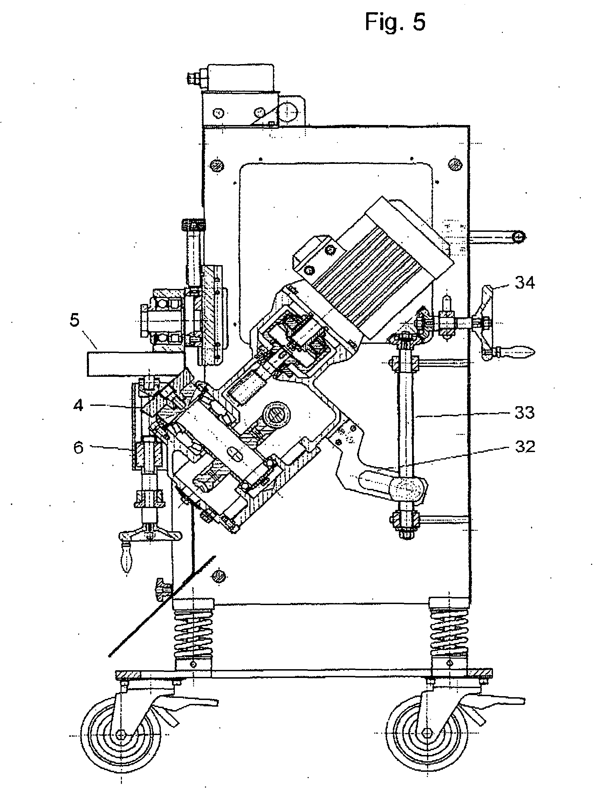

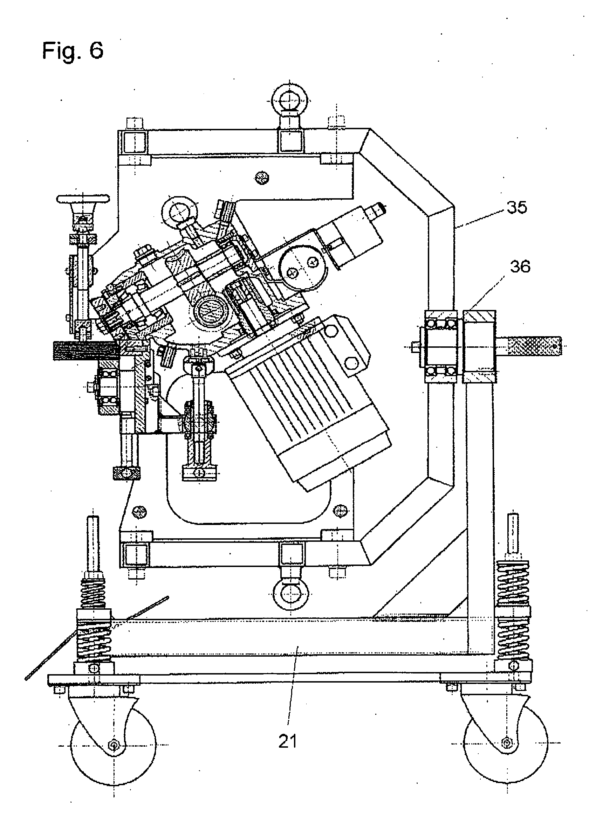

In order to carry out this rotational movement of the block (2) of the machine in its assembly with respect to the silage sides (1) or chassis of the machine, said block has a lever (8) provided with a threaded coupling for a spindle (9), which spindle runs to an accessible area of the machine where it is finished in a manual actuation element such as a flywheel (10) or handle (20). The arrangement of this actuation spindle can vary: in figure 1 it runs vertically in the rear area of the machine; in figures 4 and 6 it is located in a downward direction and is accessed from the front area; a vertical arrangement that is accessed by the rear face of the machine is observed in figure 5.

The fixing of the part (5) to be machined in the machine is carried out by means of a lower carriage (6) having several horizontal movement rollers which, together with an upper roller (7) and the tool (4) allow maintaining the part always in a horizontal position. The carriage (6) is located in vertical guides allowing to carry out a vertical adjustment thereof by means of the spindle (16); at least one screw (15) tightening the carriage (6) in the head of the machine is arranged for the mobility and fixing of the carriage. In the same way, the upper roller (7) is assembled in a spindle (17) actuated from a flywheel (18) or another means allowing to vary the height of the part (5) with respect to the tool (4), together with the position of the carriage (6), which determines the degree of machining carried out by the tool (4) as the height of the part with respect to it is definitely varied in this way.

As can be seen in the figures, the machine is assembled in a carriage (19) provided with orientable wheels (20) allowing its movement in any direction, although in operative conditions it will be moved sideways parallel to the part to be machined. The base (21) of the machine is assembled resting at its corners between two springs (23-24), the first of which is assembled between the base of the carriage (19) and the base (21) of the machine and the second is assembled between the latter and an upper stop nut (25), all of this being assembled in a threaded rod or bar (26) welded or fixed to the carriage (19). As can be observed, the support of the lower spring (23) is carried out on a threaded nut or part (27) having manual or tool rotation means allowing to position it at the suitable height for varying the work height of the machine together with the stop nut (25) and the length of the rod (26).

The machine has at its lower part a flap preventing the chips from falling into the rolling path and making its forward movement difficult or damaging the wheels.

Figure 4 shows a similar machine in which the shape and arrangement of the support of the spindle (29) for varying the machining angle by means of the handle (30) , the arrangement of the block of the machine and of the movement carriage remaining identical.

Figure 5 shows a machine assembled in an inverted position, such that in this case the cutting tool acts from the lower part of the part (5), the support carriage (6) for said part remaining virtually in the same position. The shape and arrangement of the lever (32) as well as the guide windows allowing the rotation of the block of the machine have also been varied in this embodiment; in this case the spindle (33) has a vertical arrangement and a coupling towards a horizontal ending towards the rear area of the machine where it ends in an actuation flywheel (34).

In the case shown in figure 6, a machine with features similar to those of figure 4 regarding the arrangement of its elements is shown, but in this case, the machine assembly is assembled in a frame (35) having a C-shaped configuration and having in the center of its web a shaft (36) by means of which it is coupled in the structure (21) in a vertical-side extension thereof, for the purpose of allowing the rotation of the machine with the intention of maintaining it in a conventional operative position like the one shown, or in an inverted position in which the tool (4) is located under the part (5) to be machined. Any of these positions will be fixed by means of a pin or similar means linking the frame (35) and the support (21).

Having sufficiently described the nature of the invention as well as a preferred embodiment, it is stated for all relevant purposes that the materials, shape and arrangement of the described elements can be modified provided that this does not entail the alteration of the essential features of the invention claimed below:

## Claims

1. A beveling machine comprising a casing (1) in which a block (2) of the machine is assembled, including a transmission from an actuation motor (3) to a cutting tool (4) arranged in a shaft inclined with respect to the horizontal, in front of which it incorporates fixing means for fixing a part (5), which upon carrying out the machining of the part causes a continuous bevel cut and causes a relative side movement between the part and the cutting tool, the part moving as it is machined when the parts are small, or the machine itself moving on the part when the latter is large, in the casing of the machine, means for the rotation of the block (2) of the machine inside it, which means allow varying the angle formed by the shaft of the cutting tool (4) with the horizontal for the purpose of adjusting the beveling angle; **characterized in that** the machine comprises in addition:
a) a sliding carriage (6) forming the means for fixing the part (5) to be machined, provided with height adjustment means which allow varying the nearing or separation of the part (5) with respect to the cutting tool (4) and thus controlling the bevel degree caused by the tool;
b) means for the support and independent movement of the machine formed by a carriage (19) with orientable wheels(20) and an independent suspension mechanism formed by four corner supports (22) each of which is located between respective springs (23-24) which are interposed respectively between the support point in the carriage (19) and a base (21) of the machine and between the base (21) and an upper stop nut (25), said springs acting as a suspension means for the base (21) of the machine so that the latter can carry out a horizontal movement during its running despite the deficiencies or obstacles in its path.

2. A beveling machine according to the previous claim, **characterized in that** the block (2) of the machine has at its side projecting rods or screws projecting through arched windows (11) in the lateral sides of the machine (1) which define rotation guides for said block (2), at least one of these rods having a fixing screw in a certain position marked by the graduated scale (14), whereas the block (2) of the machine orthogonally has a projecting lever (8) provided with a threaded coupling for a spindle (9), moving by means of a flywheel (10) or another similar means, through which the rotation of the block in its coupling in the lateral sides in a vertical plane parallel to said silage sides is achieved, and thus the variation of the angle of attack of the tool (4) in the part (5) in order to adjust the beveling degree is achieved.

3. A beveling machine according to the claim 1, **characterized in that** each of the support points in the carriage (19) is formed by a vertically arranged threaded rod (26) and provided at the base with a threaded part by way of a nut (27) forming the seating base for the corresponding lower spring (23), the height of the base (21) of the machine being varied with the nut until it reaches the desired position.

4. A beveling machine according to the previous claims, **characterized in that** the block (2) of the machine is assembled in a frame (35) having a C-shaped configuration and having in the center of its web a shaft (36) assembled in the base (21) of the structure of the machine which allows rotating the machine so as to locate the tool above or under the part (5) to be machined, positions which are ensured with a through pin linking said frame (35) with the base (21) at its vertical post.

## Patentansprüche

1. Abschrägmaschine, welche ein Gehäuse (1) umfasst, in welchem ein Block (2) der Maschine montiert ist, einschließlich einer Übersetzung von einem Antriebsmotor (3) zu einem Schneidewerkzeug (4), das an einem bezüglich der Horizontalen geneigten Welle angeordnet ist, vor der Befestigungsmittel zum Befestigen eines Teils (5) eingebaut sind, welche nach dem Durchführen der Bearbeitung des Teils einen durchgehenden Schrägschnitt und eine relative seitliche Bewegung zwischen dem Teil und dem Schneidewerkzeug bewirken, wobei sich das Teil im Laufe seiner Bearbeitung bewegt, wenn die Teile klein sind, oder sich die Maschine selbst auf dem Teil bewegt, wenn Letzteres groß ist, im Gehäuse der Maschine, Mittel zum Rotieren des Blocks (2) der Maschine in ihrem Inneren, wobei die Mittel eine Änderung des durch die Welle des Schneidewerkzeugs (4) mit der Horizontalen gebildeten Winkels ermöglichen, mit dem Ziel, den Abschrägwinkel einzustellen; **dadurch gekennzeichnet, dass** die Maschine zusätzlich Folgendes umfasst:
a) einen die Mittel zum Befestigen des zu bearbeitenden Teils (5) bildenden Schlitten (6), der mit Höhenverstellmitteln versehen ist, welche die Änderung der Annäherung oder Entfernung des Teils (5) bezüglich des Schneidewerkzeugs (4) ermöglichen, und daher das Kontrollieren des durch das Werkzeug erzeugten Abschräggrads;
b) Mittel zum Stützen und unabhängigen Bewegen der Maschine, die durch ein Fahrgestell (19) mit ausrichtbaren Rädern gebildet sind, und einen unabhängigen Federmechanismus, der durch vier Eckstützen (22) gebildet ist, von denen jede zwischen entsprechenden Federn (23 - 24) gelegen ist, welche jeweils zwischen dem Stützpunkt im Fahrgestell (19) und einem Boden (21) der Maschine und zwischen dem Boden (21) und einer oberen Anschlagmutter (25) eingefügt sind, wobei die genannten Federn als Federmittel für den Boden (21) wirken, so dass Letzterer trotz der Mängel oder Hindernisse in seinem Weg eine horizontale Bewegung während seiner Fahrt durchführen kann.

2. Abschrägmaschine nach dem vorherigen Anspruch, **dadurch gekennzeichnet, dass** der Block (2) der Maschine überstehende Stangen oder Schrauben auf seiner Seite aufweist, die in den lateralen Seiten der Maschine (1) durch gebogene Fenster (11) ragen, welche Rotationsführungen für den genannten Block (2) definieren, wobei zumindest eine dieser Stangen eine Befestigungssschraube in einer bestimmten durch die Strichskala (14) markierten Position hat, während der Block (2) der Maschine orthogonal einen überstehenden Hebel (8) hat, der mit einer Gewindekupplung für eine Spindel (9) versehen ist, die sich über eine Schwungscheibe (10) oder ein anderes ähnliches Mittel bewegt, durch welches die Rotation des Blocks in seiner Kupplung in den lateralen Seiten in einer zu den genannten Silageseiten parallelen, vertikalen Ebene erreicht wird, und somit die Änderung des Auftreffwinkels des Werkzeugs (4) in dem Teil (5) erreicht wird, um den Abschräggrad einzustellen.

3. Abschrägmaschine nach Anspruch 1, **dadurch gekennzeichnet, dass** jeder der Stützpunkte im Fahrgestell (19) durch eine vertikal angeordnete Gewindestange (26) gebildet ist, und am Boden mit einem Gewindeteil nach Art einer den Auflageboden für die entsprechende untere Feder (23) bildenden Mutter (27) versehen ist, wobei die Höhe des Bodens (21) der Maschine mit der Mutter verändert wird, bis er die gewünschte Position erreicht.

4. Abschrägmaschine nach den vorherigen Ansprüchen, **dadurch gekennzeichnet, dass** der Block (2) der Maschine in einem Rahmen (35) montiert ist, der eine C-förmige Ausbildung hat, und wobei in der Mitte seines Stegs eine Welle (36) im Boden (21) der Struktur der Maschine montiert ist, welche es ermöglicht, die Maschine zu rotieren, um das Werkzeug oberhalb oder unterhalb des zu bearbeitenden Teils (5) anzuordnen, wobei diese Positionen mit einem Bolzen gesichert werden, der den genannten Rahmen (35) mit dem Boden (21) an seinem vertikalen Ständer verbindet.

## Revendications

1. Machine à biseauter comprenant une carcasse (1) dans laquelle est assemblé un bloc (2) de la machine, en incluant une transmission d'un moteur de commande (3) à un outil de coupe (4) aménagé dans un arbre incliné par rapport à l'horizontale, en face duquel il incorpore des moyens d'attache pour fixer une pièce (5), qui lors de la réalisation de l'usinage de la pièce provoque une coupe biseautée continue et provoque un mouvement latéral relatif entre la pièce et l'outil de coupe, la pièce se déplaçant au fur et à mesure qu'elle est usinée lorsque les pièces sont petites, ou à propre machine se déplaçant sur la pièce lorsque cette dernière est grande, dans la carcasse de la machine, des moyens pour la rotation du bloc (2) de la machine en son sein, ces moyens permettant de varier l'angle formé par l'arbre de l'outil de coupe (4) avec l'horizontale afin d'ajuster l'angle de biseautage ; **caractérisée en ce que** la machine comprend en outre :
a) un chariot glissant (6) formant les moyens pour fixer la pièce (5) à usiner, pourvu de moyens d'ajustage en hauteur qui permettent de varier l'approche ou la séparation de la pièce (5) par rapport à l'outil de coupe (5) et de la sorte, de contrôler le degré de biseautage provoqué par l'outil ;
b) des moyens pour le support et le mouvement indépendant de la machine formés par un chariot (19) avec des roues orientables (20) et un mécanisme de suspension indépendant formé par quatre supports angulaires (22), chacun d'entre eux étant situé entre des ressorts respectifs (23-24) qui sont interposés respectivement entre le point de support dans le chariot (19) et une base (21) de la machine et entre la base (21) et un écrou indesserrable supérieur (25), lesdits ressorts agissant comme des moyens de suspension pour la base (21) de manière à ce que celle-ci puisse réaliser un mouvement horizontal pendant son fonctionnement en dépit des déficiences ou obstacles lors de sa course.

2. Machine à biseauter selon la revendication précédente, **caractérisée en ce que** le bloc (2) de la machine a à son côté des tringles ou vis de projection se projetant à travers des fenêtres cintrées (11) sur les côtés latéraux de la machine (1) qui définissent des guides de rotation pour ledit bloc (2), au moins une de ces tringles ayant une vis de fixation à une certaine position marquée par l'échelle graduée (14), tandis que le bloc (2) de la machine a orthogonalement un levier de projection (8) pourvu d'un couplement à vis pour une broche (9), se déplaçant par le biais d'un volant (10) ou d'un autre moyen similaire, à travers lequel est réalisée la rotation du bloc dans son couplement dans les côtés latéraux dans un plan vertical parallèle auxdits côtés d'ensilage, et de la sorte, est réalisée la variation de l'angle d'attaque de l'outil (4) dans la pièce (5) afin d'ajuster le degré de biseautage.

3. Machine à biseauter selon la revendication 1, **caractérisée en ce que** chacun des points de support dans le chariot (19) est formé par une tringle à vis aménagée verticalement (26) et pourvue à sa base d'une partie à vis en guise d'écrou (27) formant la base de siège pour le ressort inférieur correspondant (23), la hauteur de la base (21) de la machine étant variée avec l'écrou jusqu'à atteindre la position souhaitée.

4. Machine à biseauter selon les revendications précédentes, **caractérisée en ce que** le bloc (2) de la machine est assemblé dans un châssis (35) ayant une configuration sous forme de C et ayant au centre de son âme un arbre (36) assemblé à la base (21) de la structure de la machine qui permet de faire tourner la machine pour situer l'outil au-dessus ou au-dessous de à pièce (5) à usiner, des positions qui sont assurées par une cheville passante qui unit ledit châssis (35) à la base (21) dans son montant vertical.
